# EUROPEAN PATENT APPLICATION

(11) **EP 2 725 641 A2**
(43) Date of publication of application: **30.04.2014**
(21) Application number: 12803304.0
(22) Date of filing: 18.04.2012
(51) Int. Cl.: H01M 4/485, H01M 4/1391, H01M 10/052, C01G 23/04

(54) **METHOD FOR PREPARING AN ELECTRODE ACTIVE MATERIAL FOR IMPROVING THE PROPERTIES OF A BATTERY, AND LITHIUM SECONDARY BATTERY INCLUDING THE ELECTRODE ACTIVE MATERIAL PREPARED THEREBY**

(30) Priority: 21.06.2011 KR 20110060109
(71) Applicant: Samsung Fine Chemicals Co., Ltd., Ulsan 680-090 (KR)
(72) Inventor: KIM, Chun Joong, Seoul 135-782 (KR); CHOI, Seon Ju, Seoul 152-753 (KR); KIM, Soo Chan, Chungcheongnam-Do 331-855 (KR); CHANG, Dong Gyu, Daejeon-Si 301-131 (KR); KIM, Keon IL, Daejeon-Si 305-761 (KR); YANG, Woo Young, Daejeon-Si 302-747 (KR)
(74) Representative: Kador & Partner
(86) International application number: PCT/KR2012/002965
(87) International publication number: WO 2012/176975

(57) **Abstract**

A method of preparing an electrode active material for manufacturing a lithium secondary battery exhibiting stable charging/discharging efficiency and life-cycle characteristics even during high-speed charging/discharging cycles is provided. Also, a method of controlling both a composition ratio (Ti/Li) of surface elements and a composition of a lithium element in a lithium titanium oxide which is known to be an electrode active material having a relatively stable structure is provided. The lithium secondary battery using the lithium titanium oxide manufactured by the method as the electrode active material can be stably used by maintaining charging/discharging efficiency and charging capacity even during the high-speed charging/discharging cycles.

## Description

### CROSS-REFERENCE TO RELATED APPLICATION

This application claims priority to and the benefit of Korean Patent Application No. 2011-0060109, filed on June 21, 2011, the disclosure of which is incorporated herein by reference in its entirety.

### BACKGROUND

### 1. Field of the Invention

The present invention relates to a method of preparing an electrode active material for lithium secondary batteries exhibiting stable charging/discharging efficiency and life-cycle characteristics even during high-speed charging/discharging cycles, and a lithium secondary battery including an electrode active material prepared by the same. More particularly, the present invention relates to a method of controlling a composition ratio and compositions of elements in a surface of the electrode active material.

### 2. Discussion of Related Art

With the rapid development of the electronics, communications and computer industries, portable electronics and communication devices such as camcorders, mobile phones, notebook PCs and the like have remarkably developed. As a result, there is an increasing demand for a lithium secondary battery as a power source which can drive the devices. In particular, the lithium secondary battery has actively developed as an environmentally friendly power source in the field of applications of electric automobiles, uninterruptible power supplies, machine tools and artificial satellites in Korea, Japan, Europe and USA.

A material currently used as an anode active material of a lithium secondary battery includes crystallized carbons such as natural graphite and synthetic graphite, and non-crystallized carbons such as non-graphitizable carbon and easily graphitizable carbon.

Meanwhile, to satisfy the requirements of safety and high-speed charging/discharging, attention has been drawn to lithium titanium oxides. Lithium titanium oxides are electrode active materials having a stable structure such as a spinel structure, for example, an electrode material having good cycle performance. Also, lithium titanium oxides have a superior cycling property due to a unique low change in volume during charging and discharging processes. That is, a number of charging and discharging cycles may occur without degrading battery performance.

However, although lithium secondary batteries using a lithium titanium oxide having a relatively stable structure as an electrode material also exhibit excellent battery characteristics during low-speed charging/discharging cycles, they have problems in that charging/discharging efficiency may be deteriorated or discharging capacity may be degraded with high-speed charging/discharging cycles. In particular, amorphous Li₂CO₃ or Li₂TiO₃ is precipitated on a surface of the electrode material due to the presence of an excessive amount of a lithium element included in the active material. Such Li₂CO₃ or Li₂TiO₃ generates a gas during high-speed and long-term charging/discharging cycles of a battery, causing swelling of the battery.

Therefore, there is an ongoing effort to develop a material for electrode active materials for preparing a lithium secondary battery, in which no educt forms even during the high-speed charging/discharging cycles in the lithium secondary battery using the lithium titanium oxide as the electrode material, and which exhibits stable charging/discharging efficiency and also has excellent life-cycle characteristics.

### SUMMARY OF THE INVENTION

The present invention is directed to a method of preparing an electrode active material for lithium secondary batteries in which no precipitate forms on a surface of an electrode even after high-speed and long-term charging/discharging cycles when used as an electrode material of a lithium secondary battery.

Also, the present invention is directed to manufacturing of a lithium secondary battery exhibiting high charging/discharging efficiency and life-cycle characteristics during high-speed charging/discharging cycles.

According to an aspect of the present invention, there is provided a method of preparing a lithium titanium oxide (LTO). Here, a composition ratio (Ti/Li) of a titanium element to a lithium element in a surface of the LTO is controlled to be greater than or equal to 0.8.

Preferably, in the method, a composition of the lithium element in the surface of the LTO may be controlled to be less than 20%.

Preferably, the method of preparing an LTO may include mixing a lithium compound and a titanium compound, and thermally treating the reaction mixture at a temperature of 700 °C to 900 °C for 4 to 8 hours.

Preferably, the mixing of the lithium compound and the titanium compound may be performed by introducing the lithium compound and the titanium compound into a solvent and stirring the lithium compound and the titanium compound in a slurry phase.

Preferably, the mixing of the lithium compound and the titanium compound may be performed by uniformly mixing the powdery lithium and titanium compounds.

Preferably, the thermal treatment of the reaction mixture may be performed in a closed container under a general ambient atmosphere.

According to another aspect of the present invention, there is provided a lithium secondary battery including the lithium titanium oxide (LTO) prepared by the above-described method as an electrode active material.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a diagram showing the X-ray photoelectron spectroscopy (XPS) spectrum results of a lithium titanium oxide prepared in Example;
FIG. 2 is a diagram showing the X-ray diffraction (XRD) spectrum results of the lithium titanium oxide prepared in Example;
FIG. 3 is a diagram showing the XPS spectrum results of a lithium titanium oxide prepared in Comparative Example; and
FIG. 4 is a diagram showing the XRD spectrum results of the lithium titanium oxide prepared in Comparative Example.

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the scope of the invention.

The present invention provides a method of preparing an electrode active material for lithium secondary batteries capable of improving battery characteristics especially during high-speed charging/discharging cycles.

The preferable electrode active material applicable to the present invention is an active material having a relatively stable structure which does not collapse during conventional charging/discharging cycles and thereby battery characteristics does not deteriorate. The representative electrode active material is lithium titanium oxide (LTO).

Therefore, the present invention provides a method of preparing an LTO having excellent charging/discharging efficiency and life-cycle characteristics during high-speed charging/discharging cycles.

More particularly, the present invention provides a method of preparing an electrode active material capable of improving battery characteristics upon high-speed charging/discharging of a lithium secondary battery using a method of controlling composition ratios and compositions of surface elements in the electrode active material.

Degradation of the battery characteristics caused during high-speed charging/discharging cycles of a battery is due to swelling of the battery by a material precipitated on a surface of the electrode active material as the charging/discharging cycles are repeated. Also, precipitation on a surface of an electrode is expected to be associated with the compositions of the surface elements present on a surface of the active material.

In the case of the LTO, the lithium element present at an excessive amount on a surface of the LTO is precipitated in the form of amorphous Li₂CO₃ or Li₂TiO₃ as the high-speed charging/discharging cycles are repeated. Such Li₂CO₃ or Li₂TiO₃ causes swelling of a battery, which results in degraded battery characteristics. Therefore, controlling an amount of the lithium element present on the surface of the LTO may be one method of preventing degradation of the battery.

In the present invention, the method of controlling a composition ratio (Ti/Li) of a titanium element to a lithium element and a composition of the lithium element on a surface of the LTO is used to control an amount of the lithium element present on the surface of the LTO.

The present invention aims at improving high-speed charging/discharging characteristics in the lithium secondary battery using the LTO as the electrode active material by preparing the LTO satisfying the above mentioned requirements required to prepare the LTO.

Preferably, the present invention provides a method of controlling a composition ratio (Ti/Li) of the lithium element to the titanium element on the surface of the LTO to be greater than or equal to 0.8.

The term "surface" of the LTO used in the present invention refers to a range of surface layers to be measured by X-ray photoelectron spectroscopy (XPS) used in the present invention to measure a composition of an element on a surface of a compound. That is, the present invention provides a method of preparing an LTO in which a composition ratio (Ti/Li) of the lithium element to the titanium element is controlled to be greater than or equal to 0.8 when the compositions of the surface elements in the LTO are analyzed using XPS. A lithium secondary battery including the lithium titanium oxide prepared thus exhibits improved charging/discharging efficiency and life-cycle characteristics especially during high-speed charging/discharging cycles.

Also, the present invention provides a lithium secondary battery having more improved high-speed charging/discharging characteristics using a method of controlling a composition of the lithium element on a surface of the LTO.

Preferably, a method of controlling a composition of the lithium element on a surface of the LTO to be less than 20% is provided in the present invention.

The LTO in which the composition ratio of the surface elements and the composition of the lithium element on the surface thereof are controlled using the above-described method has an advantage in that precipitation of a foreign substance such as Li₂CO₃ or Li₂TiO₃ on a surface of an electrode during high-speed charging/discharging cycles, which is due to the lithium element present at an excessive amount on a surface of the LTO, does not occur. Also, an inner structure of the electrode active material does not deform even when long-term charging/discharging cycles are repeated. Therefore, the lithium secondary battery including the LTO prepared according to the present invention as the electrode active material exhibits high high-speed charging/discharging efficiency and excellent life-cycle characteristics.

According to one exemplary embodiment of the present invention, a method of preparing a lithium titanium oxide (LTO) through the following operations is provided:
mixing a lithium compound and titanium compound; and
thermally treating the reaction mixture at a temperature of 700 °C to 900 °C for 4 to 8 hours.

The lithium compound, as a lithium supply source in the LTO, may be selected from the group consisting of Li₂CO₃, Li₂C₂O₄, LiHCO₃, LiO₂, LiOOCCH₃ and a combination thereof. Also, the titanium compound used as a titanium supply source may be selected from the group consisting of TiO₂, TiH₂, TiCl₄, TiN, C₁₂H₂₈O₄Ti and a combination thereof. However, the lithium compound and the titanium compound are not limited to the compounds as described above. For example, compounds may be selected and used without limitation as long as they can be widely used as the supply source of the lithium element or titanium element upon preparation of the LTO.

Next, a method of mixing a lithium compound and a titanium compound that may be used herein may include a method of introducing a lithium compound and a titanium compound into a solvent and stirring the lithium compound and the titanium compound in a slurry phase, or a method of uniformly mixing powdery lithium compounds and titanium compounds.

The method of introducing a lithium compound and a titanium compound into a solvent and stirring the lithium compound and the titanium compound in a slurry phase may be performed by allowing the lithium compound and the titanium compound to react while stirring in a state in which the lithium compound and the titanium compound are mixed in the solvent in the slurry phase, thereby forming a reaction mixture in the form of a slurry phase. In this case, the method may include grinding the reaction mixture using a ball mill.

Solvents used for mixture in a slurry phase may be used without limitation as long as they can form a slurry of the lithium compound and the titanium compound. For example, a solvent selected from the group consisting of water, acetone, methanol, ethanol, isopropyl alcohol, and a combination thereof may be used herein.

Also, a ratio of a solid content to the solvent may be in a range of 10% to 40% (based on a mass ratio) so as to facilitate proper mixing reaction and grinding of the lithium compound and the titanium compound in the solvent.

When the mixing reaction of the lithium compound and the titanium compound in the solvent is completed, the solvent is removed through a method such as spray drying, vacuum drying, air drying, or oven drying to obtain a powdery reaction mixture.

Next, in the method of uniformly mixing the powdery lithium compounds and titanium compounds, powders of the lithium compound and the titanium compound are sufficiently mixed using a mixer to obtain a powdery reaction mixture in which the lithium compound and the titanium compound are uniformly mixed.

The reaction mixture of the lithium compound and the titanium compound prepared thus may be thermally treated to obtain a final LTO. The thermal treatment may be performed by firing the reaction mixture at 700 °C to 900 °C for 4 to 8 hours. Here, when the firing temperature is less than 700 °C, a capacity of the electrode active material to be prepared may be lowered due to reduced crystallinity of LTO powder. On the other hand, when the firing temperature exceeds 900 °C, peaks of impurities may be formed, which leads to the reduced charging/discharging capacity of a battery or the growth of particles.

Also, when a thermal treatment time is set to a time less than this thermal treatment time range, crystallinity of LTO powder may be reduced as in low-temperature firing. On the other hand, when the thermal treatment time is set to a time greater than this thermal treatment time range, stability of the battery may be degraded due to structural deformation in the LTO.

Meanwhile, the elements present on the surface of the LTO may be lost during the thermal treatment process. In this case, a loss of the elements increases as the atomic weight of the elements increases. Also, the elements present inside the LTO may be extracted to a surface of the LTO during the thermal treatment process.

Therefore, it is very important to control a temperature and time in the thermal treatment process so as to control the composition ratios and contents of the surface elements. Also, the temperature and time used for the thermal treatment process may be controlled differently according to the kinds of the lithium compound and the titanium compound used as source materials, and a mixing method and reaction conditions thereof. In addition, an atmosphere in which the thermal treatment process is performed, may affect the temperature and time of thermal treatment.

In the present invention, the composition ratio (Ti/Li) of the surface elements and the composition of the lithium element in the LTO finally obtained by controlling the thermal treatment process as described above are controlled to have any values within defined ranges.

The thermal treatment process may be performed under an atmosphere selected from the group consisting of nitrogen gas, argon gas, an argon/hydrogen mixed gas, and a nitrogen/hydrogen mixed gas, or may be performed under a conventional ambient atmosphere. When the thermal treatment process is performed under the conventional ambient atmosphere, a weakly reducing atmosphere may be formed by performing the thermal treatment process in a closed container as disclosed in Korean Patent Application No. 10-2010-0126260, and compact particles may be prepared by means of a compression effect.

The LTO prepared so that the composition ratio (Ti/Li) of the titanium element to the lithium element on a surface of the LTO is greater than or equal to 0.8 may be used for manufacture of the lithium secondary battery having improved battery characteristics during high-speed charging/discharging cycles. Also, the LTO may have further improved battery characteristics when the composition of the lithium element on the surface of the LTO is controlled to be less than 20%.

Also, a powdery LTO having nano-sized particles is preferably prepared in the present invention.

However, it should be understood that the method of preparing a lithium titanium oxide is just one exemplary embodiment in which the composition ratio of the surface elements and the composition of the lithium element are controlled, and is not intended to limit the scope of the invention. That is, the method of preparing a lithium titanium oxide in which the composition ratio (Ti/Li) of the titanium element to the lithium element on the surface of the LTO can be controlled to be greater than or equal to 0.8 and the composition of the lithium element can be controlled to be less than 20% should be understood to be included in the scope of the present invention.

Furthermore, the present invention provides a lithium secondary battery using the LTO powder prepared by the above-described method as an electrode active materials. In this case, an electrode may be manufactured to have a polar plate density of 2 g/cc or more by applying a pressure to the LTO powder. The electrode is generally prepared to have a thickness of 3 to 500 µm. In addition to the LTO prepared in the present invention, the electrode may also optionally include a conductive material, a binder, a filler, and the like. A lithium secondary battery including the electrode manufactured thus can keep high charging/discharging efficiency and high life-cycle characteristics even during the high-speed charging/discharging cycles, thereby can be stably used.

Hereinafter, the present invention will be described in further detail with reference to exemplary embodiments. However, it should be understood that the description proposed herein is merely a preferable example for the purpose of illustration only, and not intended to limit the scope of the invention.

### Example

36.8 g of Li₂CO₃ as a lithium compound, and 100 g of TiO₂ as a titanium compound, were added to 300 ml of water, and stirred at a speed of 1,000 rpm for 6 hours in a stirring machine. In this case, a molar ratio [Li]:[Ti] of a lithium element and a titanium element supplied respectively from the lithium compound and the titanium compound was 4:5, and a ratio of a solid content was 30%. The stirred slurry was ground at a rate of 8 m/s using ZrO₂ balls having an average diameter of 0.65 mm, and the ground slurry was then dried at 120 °C in an oven. 100 g of the dried powder was put into a container made of alumina, and thermally treated at 860 °C for 4 hours, with the container covered with a cap, to prepare an LTO powder.

### Comparative Example

An LTO powder was prepared in the same manner as in Example 1, except that the thermal treatment time was set to 11 hours.

### XRD and XPS analysis of LTO powder

XRD and XPS analyses were performed on the LTO powders prepared in Example and Comparative Example.

An equipment name, experimental conditions and a driver program used for XPS are listed in the following Table 1.

**Table 1**

| Model | | SIGMA PROBE (ThermoVG, U.K.) |
|---|---|---|
| X-ray Source | | Monochromatic Al-Ka |
| Wide Scan | Pass energy | 50 eV |
| | Step size | 1.0 eV |
| Narrow Scan | Pass energy | 20 eV |
| | Step size | 50 eV |
| Degree of vacuum | | 4×10⁻⁹ mB |
| Correction | | C 1*s* (284.5 eV) |
| Driver program | | Avantage (Thermo VG) |

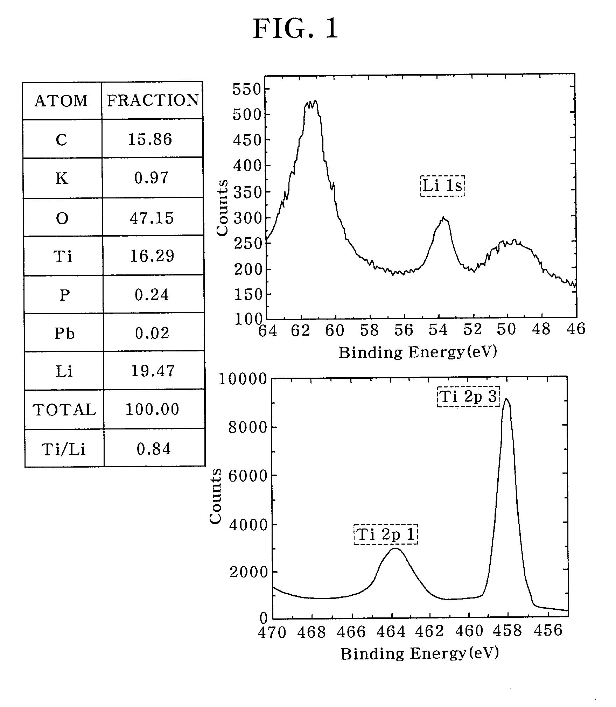

FIG. 1 shows the spectra of 1s electrons and 2p electrons in the lithium element and the titanium element present in the LTO powder prepared in Example, in addition to the data on the compositions of the surface elements calculated by measuring a width of each peak in the spectra. From the data, it was revealed that the composition ratio (Ti/Li) of the surface elements in the LTO prepared in Example was 0.84. Also, it was revealed that the composition of the lithium element was 19.47%. The composition ratio (Ti/Li) of the surface and the composition of the lithium element were controlled within ranges provided in the present invention.

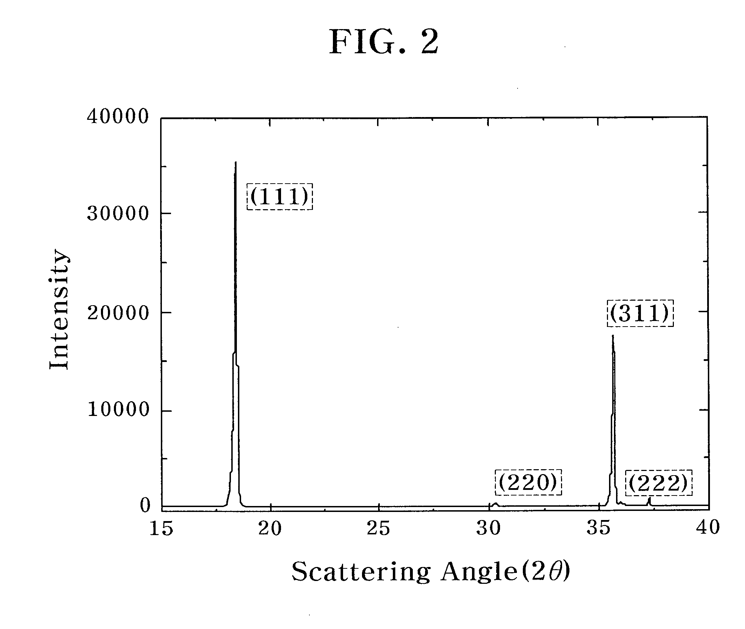

FIG. 2 is a diagram showing the XRD results of the LTO powder prepared in Example. From the XRD results, it could be seen that the LTO powder was composed of crystalline Li₄Ti₅O₁₂ with no unique secondary phase formed.

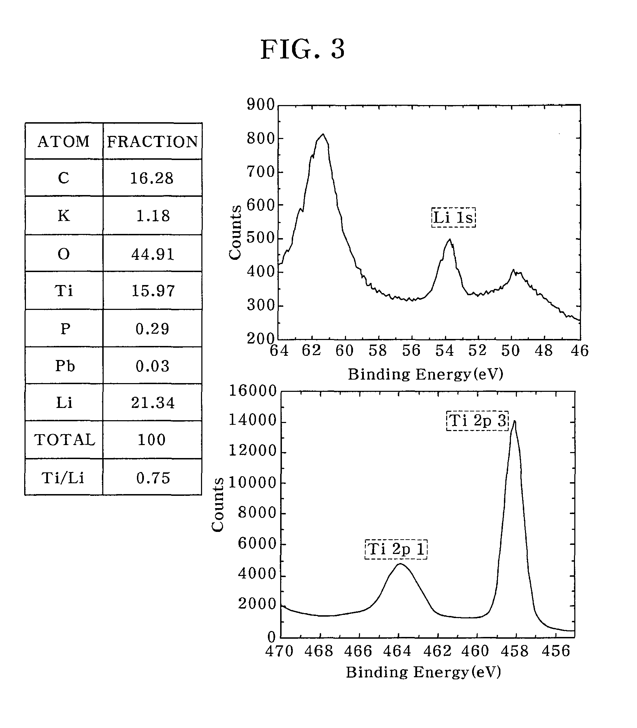

FIG. 3 shows the spectra of 1s electrons and 2p electrons in the lithium element and the titanium element present in the LTO powder prepared in Comparative Example, and the data on the compositions of the surface elements calculated by measuring a width of each peak in the spectra as well. From the data, it was revealed that the composition ratio (Ti/Li) of the surface elements in the LTO prepared in Comparative Example was 0.75. Also, it was revealed that the composition of the lithium element was 21.34%. The composition ratio (Ti/Li) of the surface and the composition of the lithium element were not controlled within ranges provided in the present invention.

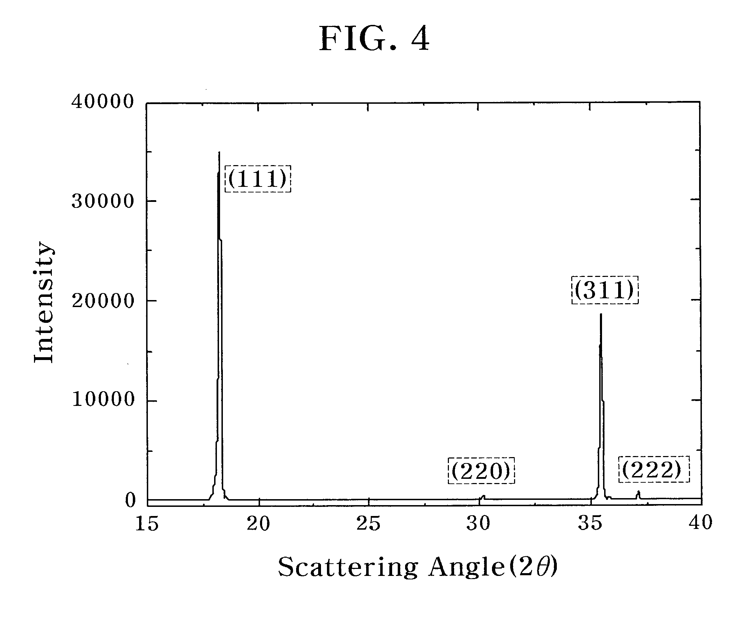

FIG. 4 is a diagram showing the XRD results of the LTO powder prepared in Comparative Example. From the XRD results, it could be seen that the LTO powder prepared in Comparative Example was also composed of crystalline Li₄Ti₅O₁₂ with no unique secondary phase formed.

### Evaluation of battery characteristics during high-speed charging/discharging cycles

A coin cell was manufactured using each of the LTO powders prepared in Example and Comparative Example as the electrode active material, and a change in battery characteristics during the high-speed charging/discharging cycles was observed.

92 parts by weight of the LTO powder, 2 parts by weight of a conductive agent (Super P carbon black), and 6 parts by weight of a binder (polyvinylidene fluoride, PVdF) were uniformly mixed, and N-methylpyrrolidone (NMP) was added as a solvent to prepare a uniformly mixed slurry. An electrode was prepared by applying the slurry onto one surface of current collector of aluminum foil and drying the slurry at 100 °C in a vacuum oven to remove the solvent.

The manufactured electrode was used as an anode, the LiCoO₂ was used as a cathode, and a porous polyethylene film was used as a separator, and an EC/DMC (1:1)-based non-aqueous electrolyte solution in which 1M LiPF₆ was dissolved was used as an electrolyte to manufacture a coin-type secondary battery, where a capacity ratio of the anode active material to the cathode active material was 1.8 .

Charging and discharging capacities according to an increase in C rate was measured for the manufactured secondary battery, and the life-cycle characteristics and the charging/discharging efficiency of the secondary battery were evaluated from the measured charging and discharging capacities (1C represents a capacity when a battery is charged for 1 hour, 5C represents a capacity when the battery is charged for 1/5 hours, that is, 12 minutes, and 0.2C represents a capacity when the battery is charged for 1/0.2 hours, that is, 5 hours). Life-cycle characteristics represent a ratio of the discharging capacity at each C rate to the discharging capacity at 0.02 C.

The measurement results are listed in the following Table 2 (Example) and Table 3 (Comparative Example).

**Table 2**

| Measurement conditions | Charging capacity (mAh/g) | Discharging capacity (mAh/g) | Life-cycle characteristics (%)* | Charging/discharging efficiency (%) |
|---|---|---|---|---|
| 0.02 C | 174.17 | 170.30 | 100.00 | 97.78 |
| 0.2 C | 171.04 | 169.86 | 99.74 | 99.31 |
| 0.5 C | 170.41 | 169.15 | 99.32 | 99.26 |
| 1 C | 170.26 | 168.20 | 98.77 | 98.79 |
| 2 C | 169.94 | 167.41 | 98.31 | 98.51 |
| 5 C | 169.74 | 166.74 | 97.91 | 98.23 |
| 10 C | 169.60 | 164.81 | 96.78 | 97.17 |

| | | | | |
|---|---|---|---|---|
| * The life-cycle characteristics are represented by values obtained by dividing the discharging capacity measured at each C rate by the discharging capacity at 0.02 C. | | | | |

**Table 3**

| Measurement conditions | Charging capacity (mAh/g) | Discharging capacity (mAh/g) | Life-cycle characteristics (%)* | Charging/discharging efficiency (%) |
|---|---|---|---|---|
| 0.02 C | 175.24 | 170.03 | 100.00 | 97.03 |
| 0.2 C | 171.31 | 169.50 | 99.69 | 98.94 |
| 0.5 C | 170.47 | 168.31 | 98.99 | 98.73 |
| 1 C | 170.57 | 166.00 | 97.63 | 97.32 |
| 2 C | 170.03 | 164.54 | 96.77 | 96.77 |
| 5 C | 169.61 | 162.57 | 95.61 | 95.85 |
| 10 C | 169.33 | 159.04 | 93.54 | 93.92 |

| | | | | |
|---|---|---|---|---|
| * The life-cycle characteristics are represented by values obtained by dividing the discharging capacity measured at each C rate by the discharging capacity at 0.02 C. | | | | |

As listed in Tables 2 and 3, in the case of the LTO powder prepared in Example it could be seen that the charging/discharging efficiency was maintained at a level of 97% or more even during the high-speed charging/discharging cycles and a decrease in discharging capacity does not occur significantly.

On the other hand, in the case of the LTO powder prepared in Comparative Example, it could be seen that the charging/discharging efficiency was drastically degraded and the discharging capacity was also reduced as the high-speed charging/discharging cycles were repeated

From these results, it was confirmed that the lithium titanium oxide (LTO) in which the composition ratio (Ti/Li) of the surface elements and the composition of the lithium element were controlled had improved high-speed charging/discharging characteristics in the lithium secondary battery with the LTO as the electrode active material.

According to the present invention, an electrode active material for lithium secondary batteries capable of improving battery characteristics in the high-speed charging/discharging cycles can be provided.

Accordingly, according to the present invention, a lithium secondary battery exhibiting high charging/discharging efficiency and excellent life-cycle characteristics during the high-speed charging/discharging cycles can be manufactured.

It will be apparent to those skilled in the art that various modifications can be made to the above-described exemplary embodiments of the present invention without departing from the scope of the invention. Thus, it is intended that the present invention covers all such modifications provided they come within the scope of the appended claims and their equivalents.

## Claims

1. A method of preparing a lithium titanium oxide (LTO), wherein a composition ratio (Ti/Li) of a titanium element to a lithium element in a surface of the LTO is controlled to be greater than or equal to 0.8.

2. The method of claim 1, wherein a composition of the lithium element in the surface of the LTO is controlled to be less than 20%.

3. The method of claim 1, comprising:
mixing a lithium compound and a titanium compound; and
thermally treating the reaction mixture at a temperature of 700 °C to 900 °C for 4 to 8 hours.

4. The method of claim 3, wherein the mixing of the lithium compound and the titanium compound is performed by introducing the lithium compound and the titanium compound into a solvent and stirring the lithium compound and the titanium compound in a slurry phase.

5. The method of claim 3, wherein the mixing of the lithium compound and the titanium compound is performed by uniformly mixing the powdery lithium compounds and titanium compounds.

6. The method of claim 3, wherein the thermal treatment of the reaction mixture is performed in a closed container under a general ambient atmosphere.

7. A lithium secondary battery comprising the lithium titanium oxide (LTO) prepared by the method defined in any one of claims 1 to 6 as an electrode active material.
